# EUROPEAN PATENT APPLICATION

(11) **EP 4 684 966 A1**
(43) Date of publication of application: **28.01.2026**
(21) Application number: 24774537.5
(22) Date of filing: 19.02.2024
(51) Int. Cl.: B41J 2/01, B41J 2/21, B41J 2/525

(54) **PRINTING DEVICE, METHOD FOR PRODUCING PRINTED MATTER, AND PROGRAM**

(30) Priority: 23.03.2023 JP 2023046873
(71) Applicant: FUJIFILM Corporation, Tokyo 106-8620 (JP)
(72) Inventor: TAMAGAWA Kiyomi, Ashigarakami-gun, Kanagawa 258-8577 (JP)
(74) Representative: Klunker IP Patentanwälte PartG mbB
(86) International application number: PCT/JP2024/005708
(87) International publication number: WO 2024/195392

(57) **Abstract**

There are provided a printing apparatus, a method for manufacturing a printed material, and a program that can match drawing positions of a plurality of liquid discharging heads that discharge inks of the same color with drawing positions of liquid discharging heads of inks of other colors. A processor prints a reference pattern on a substrate by discharging a liquid of a first color from a first liquid discharging head among a plurality of liquid discharging heads that discharge a liquid, prints each point-asymmetric measured pattern on the substrate by discharging a liquid of a second color from a second liquid discharging head and a third liquid discharging head, and corrects image data in accordance with a deviation amount between the reference pattern and the measured pattern.

## Description

### BACKGROUND OF THE INVENTION

### 1. Field of the Invention

The present invention relates to a printing apparatus, a method for manufacturing a printed material, and a program and particularly relates to a technique of detecting misregistration of an image between colors.

### 2. Description of the Related Art

A printing apparatus that draws a color image on a substrate by discharging inks of colors different from each other from a plurality of ink jet heads is known.

In such a printing apparatus, in a case where mounting positions of the respective ink jet heads are deviated, positions of inks on the substrate are deviated, and a color deviation occurs in the image drawn on the substrate. Therefore, it is necessary to adjust misregistration between colors of the ink jet heads.

JP2007-190800A discloses a detection pattern for increasing detection accuracy of a drawing position in a case of performing adjustment such that drawing positions of patterns drawn by two ink jet heads with inks of colors different from each other overlap each other.

### SUMMARY OF THE INVENTION

In some cases, drawing is performed by superimposing inks of the same color ink with a plurality of ink jet heads for a reason such as obtaining a sufficient density of an image. However, in the detection pattern of JP2007-190800A, it is difficult to perform registration with high accuracy for drawing positions of the plurality of ink jet heads that discharge inks of the same color.

The present invention has been devised in view of such circumstances, and an object thereof is to provide a printing apparatus, a method for manufacturing a printed material, and a program that can match drawing positions of a plurality of liquid discharging heads that discharge inks of the same color with drawing positions of liquid discharging heads of inks of other colors.

According to a first aspect of the present disclosure, in order to achieve the above object, there is provided a printing apparatus comprising a plurality of liquid discharging heads that discharge a liquid, a relative movement device that relatively moves the plurality of liquid discharging heads and a substrate, at least one processor, and at least one memory that stores a command to be executed by at least the one processor, in which based on image data, an image is drawn on the relatively moving substrate as the liquid is discharged from the plurality of liquid discharging heads, and at least the one processor is configured to draw a reference pattern on the substrate by discharging a liquid of a first color from a first liquid discharging head among the plurality of liquid discharging heads, draw each point-asymmetric measured pattern on the substrate by discharging a liquid of a second color different from the first color from a second liquid discharging head and a third liquid discharging head, which are different from the first liquid discharging head, among the plurality of liquid discharging heads, and correct the image data in accordance with a deviation amount between the reference pattern and the measured pattern.

According to the present aspect, the drawing positions of the plurality of liquid discharging heads that discharge the liquids of the same color can be matched with the drawing positions of the liquid discharging heads of the liquids of other colors.

The printing apparatus according to a second aspect of the present disclosure is the printing apparatus according to the first aspect, in which it is preferable that the measured pattern in a case where the deviation amount in a direction of the relative movement is acquired and the measured pattern in a case where the deviation amount in a direction orthogonal to the direction of the relative movement is acquired are different from each other. Accordingly, the drawing position of the relative movement and the direction orthogonal to the direction of the relative movement of the plurality of liquid discharging heads that discharge the liquids of the same color can be matched with the drawing positions of the liquid discharging heads of the liquid of other colors in the printing apparatus.

The printing apparatus according to a third aspect of the present disclosure is the printing apparatus according to the second aspect, in which it is preferable that the measured pattern in a case where the deviation amount on an upstream side in the direction of the relative movement, which is the deviation amount in the direction of the relative movement, is acquired and the measured pattern in a case where the deviation amount on a downstream side in the direction of the relative movement is acquired are different from each other. Accordingly, the printing apparatus on the upstream side and the downstream side of relative movement of the plurality of liquid discharging heads that discharge the liquids of the same color can be matched with the drawing positions of the liquid discharging heads of the liquids of other colors.

The printing apparatus according to a fourth aspect of the present disclosure is the printing apparatus according to the second aspect, in which it is preferable that the measured pattern in a case where the deviation amount on one side toward the direction of the relative movement, which is the deviation amount in the direction orthogonal to the direction of the relative movement, is acquired and the measured pattern in a case where the deviation amount on the other side toward the direction of the relative movement is acquired are different from each other. Accordingly, the drawing position on the one side and the printing apparatus on the other side toward the relative movement of the plurality of liquid discharging heads that discharge the liquids of the same color can be matched with the drawing positions of the liquid discharging heads of the liquids of other colors.

The printing apparatus according to a fifth aspect of the present disclosure is the printing apparatus according to any one of the first to fourth aspects, in which it is preferable that the reference pattern includes a plurality of gradation lines disposed at a first interval in a first direction, and the first interval is equal to or larger than three times an average of a first value which is three times a first standard deviation indicating a liquid landing variation of the first liquid discharging head with respect to the first direction, a second value which is three times a second standard deviation indicating a liquid landing variation of the second liquid discharging head with respect to the first direction, and a third value which is three times a third standard deviation indicating a liquid landing variation of the third liquid discharging head with respect to the first direction. Accordingly, the deviation amount can be detected without being affected by the landing variation.

The printing apparatus according to a sixth aspect of the present disclosure is the printing apparatus according to any one of the first to fifth aspects, in which it is preferable that the reference pattern includes a plurality of first gradation lines disposed from a first position at a first interval in a first direction and a plurality of second gradation lines disposed from a second position different from the first position at the first interval in the first direction. Accordingly, detection accuracy of the deviation amount can be improved.

The printing apparatus according to a seventh aspect of the present disclosure is the printing apparatus according to any one of the first to sixth aspects, in which it is preferable that a drying device between the first liquid discharging head, and a second liquid discharging head and a third liquid discharging head in a direction of the relative movement is further comprised. The present aspect is suitable in a case where the deviation of the drawing position is large due to the effect of the drying device.

The printing apparatus according to an eighth aspect of the present disclosure is the printing apparatus according to any one of the first to seventh aspects, in which it is preferable that the substrate is transparent, and an image is drawn on the substrate by discharging the liquid from at least the first liquid discharging head, among the plurality of liquid discharging heads, to a printing surface of the substrate, and a background image is drawn on the substrate by discharging a white liquid from the second liquid discharging head and the third liquid discharging head to the printing surface of the substrate. The present aspect is suitable in a case where the white liquid is discharged from the plurality of liquid discharging heads in order to sufficiently obtain a density of a white background image in a back-printed printed material using the transparent substrate.

The printing apparatus according to a ninth aspect of the present disclosure is the printing apparatus according to any one of the first to eighth aspects, in which it is preferable that the image is drawn on the substrate in a single-pass method. The present aspect is suitable in a case where the same color liquid is discharged from the plurality of liquid discharging heads in order to make streaks in the relative movement direction between the substrate and the liquid discharging heads, which are unique to the single-pass method, inconspicuous.

The printing apparatus according to a tenth aspect of the present disclosure is the printing apparatus according to any one of the first to ninth aspects, in which it is preferable that a reading device that reads the substrate on which the reference pattern and the measured pattern are drawn is further comprised, and the processor is configured to calculate the deviation amount from a reading result of the reading device. Accordingly, time and effort for the user to acquire the deviation amount can be reduced, and the image data can be corrected.

According to an eleventh aspect of the present disclosure, in order to achieve the above object, there is provided a method for manufacturing a printed material including, via at least one processor, drawing a reference pattern at a first position of a relatively moving first substrate by discharging a liquid of a first color from a first liquid discharging head among a plurality of liquid discharging heads that discharge a liquid, drawing each point-asymmetric measured pattern at the first position of the relatively moving first substrate by discharging a liquid of a second color different from the first color from a second liquid discharging head and a third liquid discharging head, which are different from the first liquid discharging head, among the plurality of liquid discharging heads, detect a deviation amount between the reference pattern and the measured pattern, acquiring image data of the printed material, correcting the image data in accordance with the deviation amount, and drawing an image on a relatively moving second substrate by discharging a liquid from the plurality of liquid discharging heads based on the corrected image data.

According to the present aspect, it is possible to manufacture a printed material on which drawing is performed by matching the drawing positions of the plurality of liquid discharging heads that discharge the liquids of the same color with the drawing positions of the liquid discharging heads of the liquids of other colors.

According to a twelfth aspect of the present disclosure, in order to achieve the above object, there is provided a program causing a computer to realize a function of drawing a reference pattern at a first position of a substrate by discharging a liquid of a first color from a first liquid discharging head and a function of drawing each point-asymmetric measured pattern at the first position of the substrate by discharging a liquid of a second color different from the first color from a second liquid discharging head and a third liquid discharging head, which are different from the first liquid discharging head.

According to the present aspect, the drawing positions of the plurality of liquid discharging heads that discharge the liquids of the same color can be matched with the drawing positions of the liquid discharging heads of the liquids of other colors. The present disclosure also includes a non-transitory computer-readable recording medium, such as a compact disk-read only memory (CD-ROM), on which the program according to the twelfth aspect is recorded.

A color deviation detection pattern including the reference pattern having the plurality of gradation lines drawn with the liquid of the first color and the measured pattern drawn to be superimposed on the reference pattern, which is the point-asymmetric measured pattern drawn with the liquid of the second color different from the first color is also included in the present disclosure.

According to the present invention, the drawing positions of the plurality of liquid discharging heads that discharge the liquids of the same color can be matched with the drawing positions of the liquid discharging heads of the liquids of other colors.

### BRIEF DESCRIPTION OF THE DRAWINGS

FIG. 1 is a view conceptually showing an example of a printing apparatus according to an embodiment of the present disclosure.
FIG. 2 is a block diagram showing an electric configuration of an ink jet printing apparatus.
FIG. 3 is a top view of a first printing unit and a second printing unit.
FIG. 4 is a view showing an example of an image drawn on an impermeable substrate.
FIGS. 5A and 5B are views showing an example of a measurement mark.
FIG. 6 is a view showing the measurement mark on the substrate on which drawing is performed based on image data of the measurement mark.
FIGS. 7A and 7B are views showing an example of a measurement mark according to a first embodiment.
FIGS. 8A and 8B are views showing the measurement mark in a case where a reading pattern is vertically asymmetrical.
FIG. 9 is a view showing a relationship between a print image drawn on the impermeable substrate and the measurement mark.
FIG. 10 is a view showing the measurement mark on the substrate on which drawing is performed based on image data of the measurement mark.
FIG. 11 is a view showing an example of a gradation line.
FIG. 12 is a view showing an example of another measurement mark.
FIG. 13 is a flowchart showing steps of a method for manufacturing a printed material using the ink jet printing apparatus.

### DESCRIPTION OF THE PREFERRED EMBODIMENTS

Hereinafter, preferred embodiments of the present invention will be described in detail with reference to the accompanying drawings. In the present specification, the term "color" includes chromatic color and achromatic color. In the present specification, the term "white" means a color that does not absorb a specific wavelength or absorbs a small amount of a specific wavelength.

### <Configuration of Ink Jet Printing Apparatus>

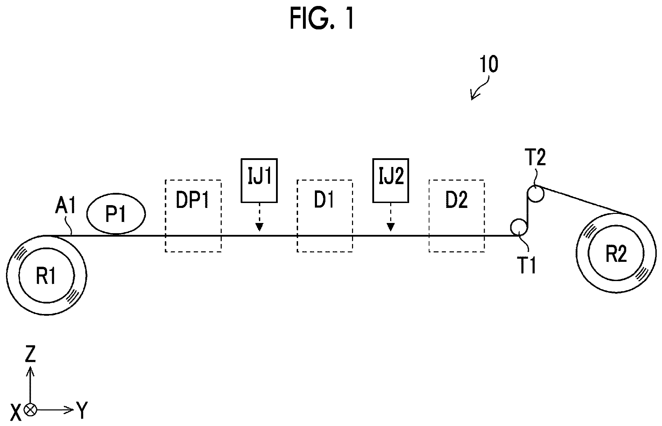

FIG. 1 is a view conceptually showing an example of a printing apparatus according to an embodiment of the present disclosure. An ink jet printing apparatus 10 shown in FIG. 1 is a printing apparatus that transports an impermeable substrate A1 through a roll-to-roll method and that prints a multicolor image including a color image and a white background image on the impermeable substrate A1.

The impermeable substrate is, for example, a transparent film substrate used in flexible packaging. The film substrate is, for example, polyethylene terephthalate (PET), oriented polypropylene (OPP), and nylon (NY). The ink jet printing apparatus 10 manufactures a back-printed printed material in which a printing target is visible from a non-printing surface with respect to the impermeable substrate A1 (an example of a "substrate").

The term "impermeable" means having impermeability to a pretreatment liquid, a first ink, and a second ink to be described later. The term "flexible packaging" means packaging formed of a material that deforms depending on a shape of an article to be packaged. The term "transparent" means that a transmittance of visible light is 30% or more and 100% or less and preferably 70% or more and 100% or less.

The ink jet printing apparatus 10 unwinds the impermeable substrate A1 having a long film shape wound in a roll shape with an unwinding device R1, transports the unwound impermeable substrate A1 in a Y-direction of FIG. 1, and winds the impermeable substrate A1 with a winding device R2.

The impermeable substrate A1 may be transported in a state where tension is applied. The tension may vary depending on a position in the transport direction or may be uniform.

The ink jet printing apparatus 10 may comprise tension adjusting means for adjusting the tension of the impermeable substrate A1. Examples of the tension adjusting means include a powder brake provided in the unwinding device R1 and/or the winding device R2, a dancer roll provided in the middle of a transport path of the impermeable substrate A1, and a control device (for example, a tension controller) that controls each type of tension by adjusting each condition of the ink jet printing apparatus 10.

In FIG. 1, an example in which the impermeable substrate A1 is transported in one direction between the unwinding device R1 and the winding device R2 is shown, but the transport path of the impermeable substrate A1 may not be one direction and may be meandering.

A method transport of the impermeable substrate A1 can be selected as appropriate from various types of web transport methods of using a drum, a roll, and the like.

In the transport path of the impermeable substrate A1 from the unwinding device R1 to the winding device R2, a pretreatment liquid application device P1, a pretreatment liquid drying zone DP1, a first printing unit IJ1, a first drying zone D1, a second printing unit IJ2, a second drying zone D2, a transport roll T1, and a transport roll T2 are disposed in this order in order from an upstream side in the transport direction of the impermeable substrate A1.

Application of a pretreatment liquid, application of the first ink, application of the second ink to the impermeable substrate A1 are performed by the pretreatment liquid application device P1, the first printing unit IJ1, and the second printing unit IJ2, respectively.

A pretreatment liquid is a liquid for pretreating a printing surface of the impermeable substrate A1 before drawing using the first ink and the second ink. The pretreatment liquid contains, for example, a coagulating agent that coagulates components contained in the first ink.

The first ink is, for example, a color ink for drawing a color image. The color ink contains water, a coloration pigment, and a resin. The second ink is, for example, a white ink for drawing a white background image. The white ink contains water, a white pigment, and a resin. The first ink may be a white ink, and the second ink may be a color ink.

The pretreatment liquid drying zone DP1, the first drying zone D1, and the second drying zone D2 each comprise a drying device such as a hot air heater. Heating and drying of a pretreatment liquid, heating and drying of a color ink, heating and drying of a white ink are performed on the impermeable substrate A1 by the pretreatment liquid drying zone DP1, the first drying zone D1, and the second drying zone D2, respectively.

In the first drying zone D1, the heating and drying of the pretreatment liquid may be substantially performed in addition to the heating and drying of the first ink.

In the second drying zone D2, the heating and drying of the pretreatment liquid and/or the heating and drying of the first ink may be substantially performed in addition to the heating and drying of the second ink. In this case, at least one of the pretreatment liquid drying zone DP1 or the first drying zone D1 may be omitted.

In addition, in a case where the impermeable substrate A1 passes through each of the drying zones in a state where the temperature of each of the drying zones is set to room temperature, heating and drying in each drying zone can also be omitted.

The ink jet printing apparatus 10 may be provided with a surface treatment unit (not shown) for performing surface treatment such as corona treatment on at least one of a front surface or a back surface of the impermeable substrate A1 between the unwinding device R1 and the pretreatment liquid application device P1 in the transport path of the impermeable substrate A1.

The ink jet printing apparatus 10 may be provided, between the second drying zone D2 and the transport roll T1 in the transport path of the impermeable substrate A1, in a cooling zone for cooling a drawn multicolor image.

In the ink jet printing apparatus 10, the pretreatment liquid application device P1 and the pretreatment liquid drying zone DP1 may be omitted.

The ink jet printing apparatus 10 may comprise, between the second printing unit IJ2 and the winding device R2 in the transport path of the impermeable substrate A1, a scanner (not shown) that reads an image drawn on the impermeable substrate A1.

### <Electric Configuration of Ink Jet Printing Apparatus>

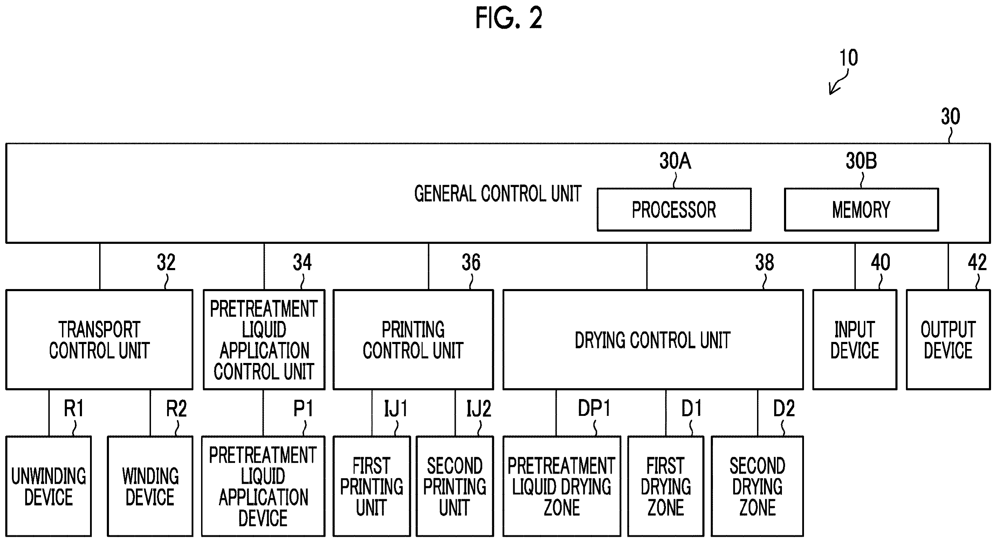

FIG. 2 is a block diagram showing an electric configuration of the ink jet printing apparatus 10. As shown in FIG. 2, the ink jet printing apparatus 10 comprises the general control unit 30, a transport control unit 32, a pretreatment liquid application control unit 34, a printing control unit 36, a drying control unit 38, an input device 40, and an output device 42.

The general control unit 30 performs general control of each unit of the ink jet printing apparatus 10. The general control unit 30 comprises a processor 30A and a memory 30B.

The processor 30A executes a command stored in the memory 30B. A hardware structure of the processor 30A includes the following various types of processors. The various types of processors include a central processing unit (CPU) that is a general-purpose processor which acts as various types of functional units by executing software (program), a graphics processing unit (GPU) that is a processor specialized in image processing, a programmable logic device (PLD) that is a processor of which a circuit configuration is changeable after manufacture, such as a field programmable gate array (FPGA), and a dedicated electric circuit that is a processor which has a circuit configuration specifically designed in order to execute specific processing, such as an application specific integrated circuit (ASIC).

One processing unit may be configured by one of the various types of processors or may be configured by the same type or different types of two or more processors (for example, a plurality of FPGAs, a combination of a CPU and an FPGA, or a combination of a CPU and a GPU). In addition, one processor may configure a plurality of functional units. As an example of configuring a plurality of functional units by one processor, first, there is a form in which one processor is configured by a combination of one or more CPUs and software and the processor acts as the plurality of functional units, as represented by a computer such as a client and a server. Second, there is a form in which a processor that realizes functions of the entire system including a plurality of functional units with one integrated circuit (IC) chip is used, as represented by a system on chip (SoC) or the like. As described above, the various types of functional units are configured by one or more of the various types of processors used as a hardware structure.

Further, the hardware structure of the various types of processors is, more specifically, an electric circuit (circuitry) in which circuit elements such as semiconductor elements are combined.

The memory 30B stores a command to be executed by the processor 30A. The memory 30B includes a random access memory (RAM) and a read only memory (ROM) (not shown). The processor 30A executes software using various types of programs and parameters stored in the ROM with the RAM as a work region and executes various types of processing of the ink jet printing apparatus 10 using the parameters stored in the ROM or the like.

The transport control unit 32 controls the unwinding device R1 and the winding device R2 (an example of a "relative movement device") to transport the impermeable substrate A1 (an example of "relative movement").

The pretreatment liquid application control unit 34 controls the pretreatment liquid application device P1 to apply a pretreatment liquid to the impermeable substrate A1.

The printing control unit 36 controls the first printing unit IJ1 and the second printing unit IJ2 to draw a color image and a white background image on the impermeable substrate A1.

The drying control unit 38 controls the pretreatment liquid drying zone DP1, the first drying zone D1, and the second drying zone D2 to heat and dry a pretreatment liquid, a color ink, and a white ink.

The input device 40 includes, for example, a mouse (not shown) and a keyboard (not shown). The input device 40 receives an input to the ink jet printing apparatus 10 from the mouse and the keyboard.

The output device 42 includes, for example, a display (not shown). The output device 42 presents information related to the ink jet printing apparatus 10 to a user.

The input device 40 and the output device 42 may comprise a communication interface that transmits and receives information between the ink jet printing apparatus 10 and another apparatus.

### <Actions of Ink Jet Printing Apparatus>

In printing using the ink jet printing apparatus 10,
first, the impermeable substrate A1 having a long film shape wound in a roll shape is unwound by the unwinding device R1,
the unwound impermeable substrate A1 is transported in the Y-direction of FIG. 1 in a state where tension is applied,
application of a pretreatment liquid is performed on the transported impermeable substrate A1 by the pretreatment liquid application device P1,
then, the pretreatment liquid is dried in the pretreatment liquid drying zone DP1 as necessary,
then, the first ink is applied by the first printing unit IJ1,
then, the first ink is dried in the first drying zone D1 as necessary,
then, the second ink is applied by the second printing unit IJ2, and
then, the second ink is dried in the second drying zone D2 as necessary.

Accordingly, a multicolor image including a color image derived from the color ink and a white background image derived from the white ink is obtained.

Next, as necessary, the obtained multicolor image is cooled, the impermeable substrate A1 on which the multicolor image is drawn is transported to the winding device R2 by the transport rolls T1 and T2, which are transport devices, and, finally, is wound by the winding device R2.

Among the transport roll T1 and the transport roll T2, the transport roll T1 transports the impermeable substrate A1 in a disposition of being in contact with a front surface side which is the printing surface of the impermeable substrate A1, and the transport roll T2 transports the impermeable substrate A1 in a disposition of being in contact with a back surface side which is the non-printing surface of the impermeable substrate A1.

### <Configurations of First Printing Unit and Second Printing Unit>

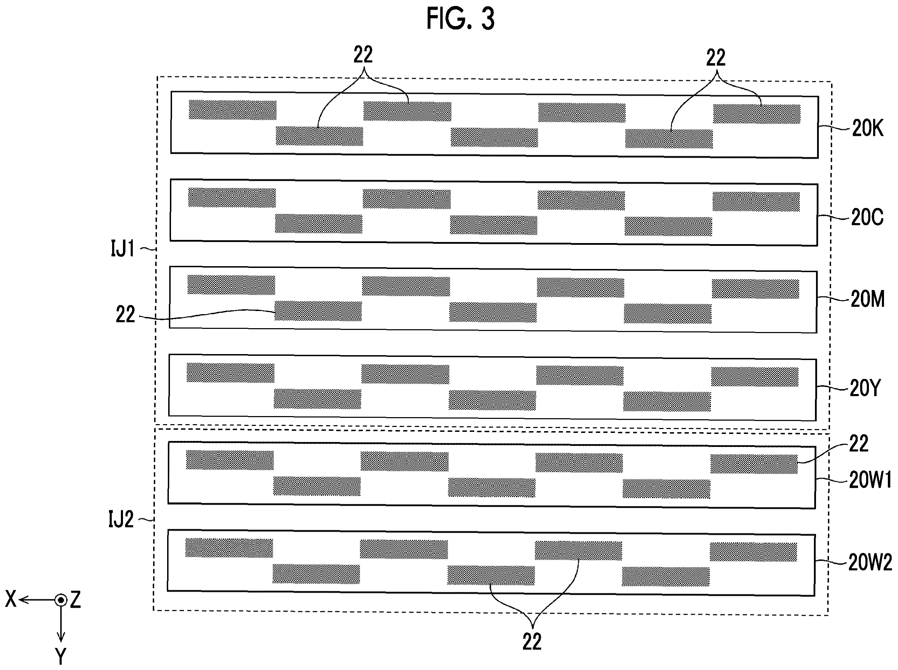

FIG. 3 is a top view of the first printing unit IJ1 and the second printing unit IJ2. In FIG. 3, the first drying zone D1 is not shown. As shown in FIG. 3, the first printing unit IJ1 comprises ink jet heads 20K, 20C, 20M, and 20Y (an example of "a plurality of liquid discharging heads"). In addition, the second printing unit IJ2 comprises ink jet heads 20W1 and 20W2. The ink jet heads 20K, 20C, 20M, and 20Y discharge a black ink, a cyan ink, a magenta ink, and a yellow ink, which are color inks, respectively. The ink jet heads 20W1 and 20W2 discharge the same white ink.

The ink jet heads 20K, 20C, 20M, 20Y, 20W1, and 20W2 each have a structure in which a plurality of (here, seven) head modules 22 are connected.

The ink jet heads 20K, 20C, 20M, 20Y, 20W1, and 20W2 are line heads in which a large number of nozzles are arranged on each surface facing the impermeable substrate A1 in a direction (herein, an X-direction) intersecting the transport direction of the impermeable substrate A1. Each nozzle is provided with a discharge energy generation element (not shown) that generates discharge energy required for discharging an ink from the nozzle.

The number of nozzles, nozzle density, and a nozzle arrangement form of the ink jet heads 20K, 20C, 20M, 20Y, 20W1, and 20W2 are not particularly limited, and various forms may be available. For example, the ink jet heads 20K, 20C, 20M, 20Y, 20W1, and 20W2 may have a configuration where the large number of nozzles are two-dimensionally arranged so that a predetermined printing resolution can be realized in the X direction.

In a case of a configuration where the large number of nozzles are two-dimensionally arranged, a projection nozzle row obtained by projecting (orthographically projecting) each nozzle such that the nozzles are projected to be arranged along the X-direction can be considered to be equivalent to one nozzle row in which the nozzles are arranged at substantially equal intervals in the X-direction with nozzle density that achieves a predetermined printing resolution. A direction of a nozzle row in which the nozzles are substantially arranged (herein, the X-direction) is referred to as a nozzle direction in some cases.

The first printing unit IJ1 draws a color image in a single-pass method by discharging a black ink, a cyan ink, a magenta ink, and a yellow ink from the ink jet heads 20K, 20C, 20M, and 20Y, respectively, in turn onto the printing surface of the impermeable substrate A1. The first printing unit IJ1 may comprise a guide roller (not shown) that supports the non-printing surface of the impermeable substrate A1.

The second printing unit IJ2 draws a white image in the single-pass method by discharging a white ink from each of the ink jet heads 20W1 and 20W2 in turn onto the printing surface of the impermeable substrate A1. The second printing unit IJ2 may comprise a guide roller (not shown) that supports the non-printing surface of the impermeable substrate A1.

The second printing unit IJ2 draws a white background image, which serves as a background of a color image, as a white image. The white background image is used for the purpose of preventing the color image from being difficult to be visible due to transmission of color in a case where the color image is drawn on the transparent impermeable substrate A1 and drawing as a base under the color image in order to improve the appearance. For this reason, the ink jet heads 20W1 and 20W2 draw the same image based on the same image data. It is important that the white background image does not protrude from an end of the color image and is not visible.

Herein, a case where the ink jet heads 20K, 20C, 20M, 20Y, 20W1, and 20W2 are line heads and drawing is performed in the single-pass method has been described. However, the ink jet heads 20K, 20C, 20M, 20Y, 20W1, and 20W2 may be short serial heads and drawing may be performed in a multi-pass method in which each of the heads scans in the direction intersecting the transport direction of the impermeable substrate A1.

### <Color Registering Method>

In a case of performing drawing on a roll-shaped substrate, an ink is discharged from an ink jet head onto the substrate extending between guide rollers to perform drawing in some cases. However, there is an upper limit to a length between the guide rollers that can maintain the flatness of the substrate. For this reason, in a case where the number of colors of ink to be applied is large, there is a problem in which an ink jet head that jets inks of all colors cannot be disposed.

In response to such a problem, a plurality of ink jet heads are disposed separately in a printing unit on the upstream side and a printing unit on a downstream side in the transport path of the substrate, and drawing is performed by the printing unit on the upstream side. Then, drawing is performed by the printing unit on the downstream side. In this case, in order to prevent the substrate on which drawing performed by the printing unit on the upstream side from being contaminated by the guide roller of the printing unit on the downstream side, printing is performed by the printing unit on the downstream side after the printing surface of the substrate on which drawing is performed by the printing unit on the upstream side is dried.

In such a method, the substrate expands and contracts due to drying treatment performed between the two printing units, and a so-called color misregistration occurs in which positions of images respectively drawn by the two printing units deviate from each other.

Herein, a case where color misregistration between a color image and a white background image, which occurs due to a large difference in printing timing between the first printing unit IJ1 and the second printing unit IJ2 in the ink jet printing apparatus 10, is adjusted will be described. As described above, it is important that the white background image does not protrude out from an end of the color image and is not visible.

Color registration is also required to be adjusted between the ink jet heads 20K, 20C, 20M, and 20Y and between the ink jet heads 20W1 and 20W2, but these adjustments may be performed by a known method.

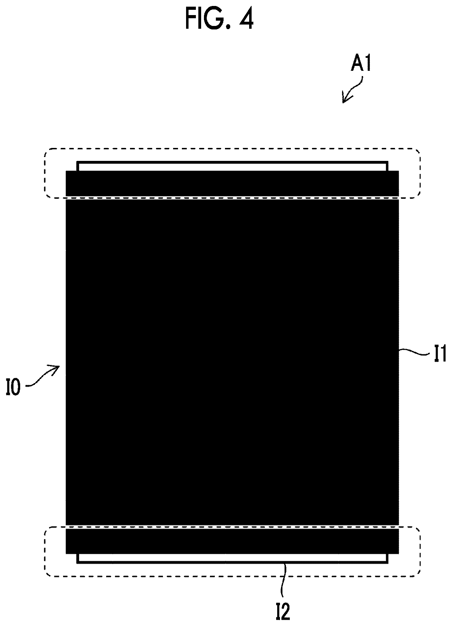

FIG. 4 is a view showing an example of an image drawn on the impermeable substrate A1, and shows a non-printing surface side of the impermeable substrate A1. An image 10 includes a color image I1 and a white background image I2 drawn to be superimposed on the color image I1. In print data of the image I0, the color image and the white background image have the same vertical and horizontal sizes and are disposed at the same position. On the other hand, in the image I0 shown in FIG. 4, there is a region where the white background image I2 protrudes out from the color image I1. This is considered to be because magnification accuracy of the impermeable substrate A1 has changed during drying and fixing in the first drying zone D1 after the drawing of the color image I1 is performed.

In order to eliminate such protrusion, correction processing of deforming vertical and horizontal sizes of a color image and a white background image is performed, and the color image and the white background image are finely superimposed. In order to perform the correction processing, it is necessary to acquire the amount of protrusion of the white background image with respect to the color image. In general, the length of the amount of protrusion is acquired using a scale loupe or the like, but as another method, there is a method of inserting a measurement mark into image data and measuring the drawn measurement mark.

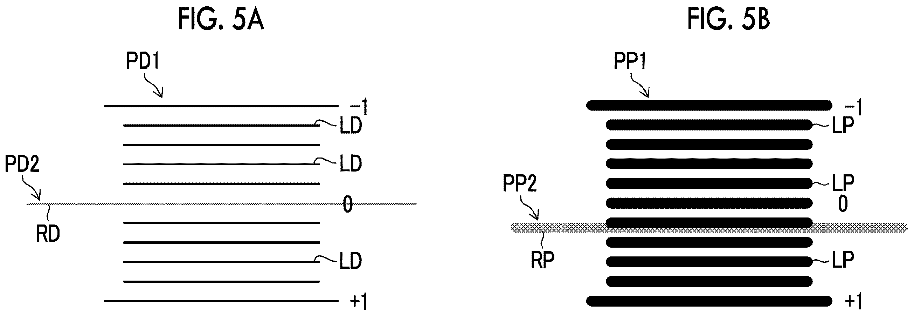

FIGS. 5A and 5B are views showing an example of the measurement mark. FIG. 5A shows image data of the measurement mark. Image data of the measurement mark has a reference pattern PD1 that is reference for detecting a deviation amount of color registration and a measured pattern PD2 for detecting the deviation amount from a positional relationship with the reference pattern PD1.

The reference pattern PD1 is, for example, a pattern drawn by the printing unit on the upstream side. The reference pattern PD1 includes a plurality of gradation lines LD. The plurality of gradation lines LD each are straight lines extending in one direction and are disposed at equal intervals in another direction orthogonal to the one direction. The reference pattern PD1 has a width of 2 mm from minus 1 mm to plus 1 mm, and the gradation lines LD are disposed at an interval of 0.2 mm. The gradation line LD at the position of minus 1 mm and the gradation line LD at the position of plus 1 mm are relatively longer than the gradation lines LD at the other positions. In addition, at the positions of minus 1 mm, 0 mm, and plus 1 mm of the reference pattern PD1, the numbers of "-1", "0", and "+1" indicating the values of the gradations are disposed, respectively.

The measured pattern PD2 is, for example, a pattern drawn by the printing unit on the downstream side. The measured pattern PD2 includes a reading pattern RD. The reading pattern RD is a straight line parallel to the gradation lines LD and is disposed to be superimposed on the position of the gradation line LD of "0" of the reference pattern PD1.

Image data of the measurement mark shown in FIG. 5A is for measuring the amount of protrusion from a printing surface side. In a case where the amount of protrusion from the non-printing surface side is measured, it is preferable that the left and right sides of the image data are reversed, and numbers indicating values of gradations are visible in a normal direction in a case where the printed measurement mark is viewed from the non-printing surface side.

FIG. 5B shows a measurement mark on the substrate drawn based on the image data of the measurement mark of FIG. 5A. Herein, the image data of the measurement mark of FIG. 5A is drawn by being horizontally reversed, and the measurement mark viewed from the non-printing surface side is shown. The measurement mark on the substrate includes a reference pattern PP1 drawn by the printing unit on the upstream side based on data of the reference pattern PD1 and a measured pattern PP2 drawn by the printing unit on the downstream side based on data of the measured pattern PD2. The reference pattern PP1 has a plurality of gradation lines LP drawn based on data of the plurality of gradation lines LD. The measured pattern PP2 has a reading pattern RP drawn based on data of the reading pattern RD.

The measurement mark on the substrate indicates that there is no deviation amount of color registration between a color image and a white background image, that is, color registration is correct in a case where the reading pattern RP of the measured pattern PP2 is drawn at a position of overlapping the gradation line LP of "0" of the reference pattern PP1.

In the example shown in FIG. 5B, the reading pattern RP is drawn at a position separated away from the position of the gradation line LP of "0" of the reference pattern PP1. A deviation amount between the position of the gradation line LP of "0" of the reference pattern PP1 and the reading pattern RP corresponds to a deviation amount between a color image and a white background image. Herein, it is found from a positional relationship between the plurality of gradation lines LP and the reading pattern RP that the deviation amount is +0.25 mm.

### <Problems of Color Registering in Case of Plurality of Ink Jet Heads of Same Color>

In some cases, a plurality of ink jet heads that jet inks of the same color are used. For example, in the ink jet printing apparatus 10, in order to obtain a sufficient density with a white ink in a case of drawing a background image with the white ink and to make streaks in the transport direction of the substrate, which are unique to the single-pass method, inconspicuous, the two ink jet heads 20W1 and ink jet head 20W2 that discharge the white ink are comprised. In this case, as described above, it is important that white images drawn by the ink jet head 20W1 and the ink jet head 20W2 accurately overlap each other. However, it is difficult to accurately superimpose and draw the same image, and a slight deviation in drawing position occurs.

For example, seven head modules 22 arranged in the X-direction are used in both the ink jet heads 20W1 and 20W2. Each head module 22 has an attachment accuracy error, and a subtle error such as inclination with the Y-direction and a Z-direction as an axis remains. For this reason, an image drawn by the ink jet head 20W1 and an image drawn by the ink jet head 20W2 may not finely overlap each other even based on the same data.

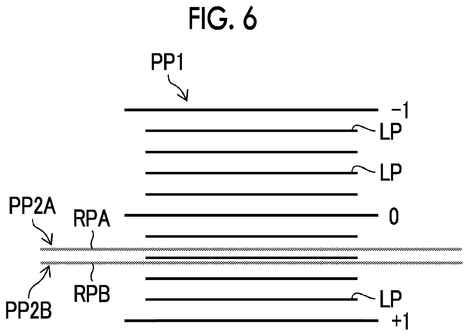

In a case where such an error is allowed, it is difficult to read the measurement mark in some cases. FIG. 6 is a view showing a measurement mark on the substrate on which drawing is performed based on image data of the measurement mark of FIG. 5A. Herein, the image data of the measurement mark of FIG. 5A is drawn by being horizontally reversed, and the measurement mark viewed from the non-printing surface side is shown. The measurement mark on the substrate includes the reference pattern PP1 drawn by any one of the ink jet head 20K, 20C, 20M, or 20Y based on data of the reference pattern PD1, the measurement pattern PP2A drawn by the ink jet head 20W1 based on data of the measured pattern PD2, and the measurement pattern PP2B drawn by the ink jet head 20W2 based on data of the measured pattern PD2. The measured patterns PP2A and PP2B each have reading patterns RPA and RPB.

In the measurement mark shown in FIG. 6, drawn positions of the reading pattern RPA and the reading pattern RPB are different, and it is unclear whether the reading pattern RPA is to be used or the reading pattern RPB is to be used in a case of detecting a deviation amount.

### <First Embodiment>

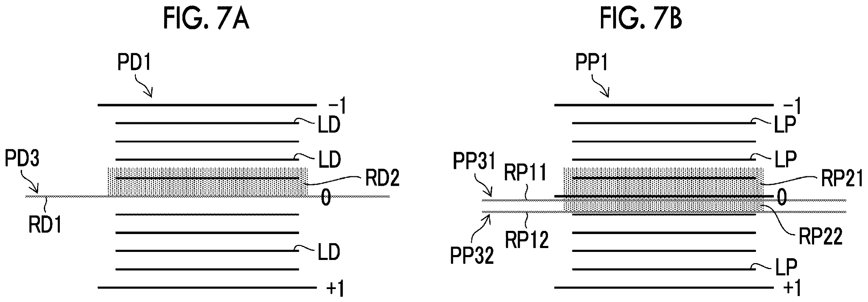

In order to prevent the above unclear situation, a measured pattern is a point-symmetric pattern having a two-dimensional area. FIGS. 7A and 7B are views showing an example of a measurement mark according to a first embodiment. FIG. 7A shows image data of the measurement mark. Image data of the measurement mark includes a reference pattern PD1 and a measured pattern PD3.

The reference pattern PD1 is a pattern drawn by any one of the ink jet head 20K, 20C, 20M, or 20Y (an example of a "first liquid discharging head"). That is, the reference pattern PD1 is a pattern of any color (an example of a "first color") of black, cyan, magenta, or yellow.

The measured pattern PD3 is a pattern drawn by the ink jet head 20W1 (an example of a "second liquid discharging head") and the ink jet head 20W2 (an example of a "third liquid discharging head"). That is, the measured pattern PD3 is a white pattern (an example of a "second color").

The measured pattern PD3 has the reading pattern RD1 and the reading pattern RD2. The reading pattern RD1 is a straight line parallel to the gradation lines LD and is disposed to be superimposed on the position of the gradation line LD of "0" of the reference pattern PD1.

The reading pattern RD2 has a two-dimensional area. The reading pattern RD2 is a rectangle having a side parallel to the reading pattern RD1 and a side orthogonal to the reading pattern RD1. The length of the side of the reading pattern RD2 orthogonal to the reading pattern RD1 is, for example, larger than the deviation amount of color registration. In addition, one of the two sides of the reading pattern RD2 parallel to the reading pattern RD1 is in contact with the reading pattern RD1. In the example of FIGS. 7A and 7B, a side of the reading pattern RD2 on a lower side (a positive side of a value of a gradation of the reference pattern PD1) is in contact with the reading pattern RD1.

The linear reading pattern RD1 and the rectangular reading pattern RD2 are each point-symmetric alone, but the measured pattern PD3 obtained by combining the two is point-asymmetric. As described above, the measured pattern may be point-asymmetric by combining point-symmetric figures.

FIG. 7B shows a measurement mark on the substrate drawn based on the image data of the measurement mark of FIG. 7A. Herein, the image data of the measurement mark of FIG. 7A is drawn by being horizontally reversed, and the measurement mark viewed from the non-printing surface side is shown. The measurement mark on the substrate includes a reference pattern PP21 drawn by any one of the ink jet head 20K, 20C, 20M, or 20Y based on data of the reference pattern PD1, a measured pattern PP31 drawn by the ink jet head 20W1 based on data of the measured pattern PD3, and a measured pattern PP32 drawn by the ink jet head 20W2 based on the data of the measured pattern PD3.

The measured pattern PP31 has a reading pattern RP11 drawn based on data of the reading pattern RD1 and a reading pattern RP21 drawn based on data of the reading pattern RD2. The measured pattern PP32 has a reading pattern RP12 drawn based on data of the reading pattern RD1 and a reading pattern RP22 drawn based on data of the reading pattern RD2.

In order to detect a deviation amount of color registration from the measurement mark on the substrate shown in FIG. 7B, an edge in contact with the reading pattern RP21, among sides (edges) of the reading pattern RP31, and an edge in contact with the reading pattern RP22, among edges of the reading pattern RP22, are used.

That is, in a case where a lower edge of the reading pattern RP21 and a lower edge of the reading pattern RP22 match the position of the gradation line LP of "0" of the reference pattern PP1, there is no deviation amount of color registration between a color image and a white background image, that is, the color registration is correct. In addition, in a case of being at a position (positive side) having a value larger than the position of 0 of the reference pattern PR1, an edge positioned on the lower side, among the edges of the reading pattern RP21 and the edges of the reading pattern RP22, corresponds to an end of the same condition as in a case where the white background image protrudes from the lower side of the color image. Therefore, by performing correction of reducing data of the white background image such that this position is 0 or less of the reference pattern PR1, protrusion of the white background image with respect to the color image can be eliminated.

Herein, protrusion of a white background image with respect to a color image has been described, but the same applies to insufficiency of the white background image with respect to the color image. That is, in a case of being at a position (negative side) having a value smaller than the position 0 of the reference pattern PR1, the lower edge, among the edges of the reading pattern RP21 and the edges of the reading pattern RP22, corresponds to an end of the same condition as in a case where the white background image is insufficient from the lower side of the color image. Therefore, by performing correction of enlarging data of the white background image such that this position is the position of 0 of the reference pattern PR1, insufficiency of the white background image with respect to the color image can be eliminated.

In the example shown in FIGS. 7A and 7B, a straight line is disposed on an edge on a side where gradations of the two-dimensional area pattern are read, but the area pattern may be used to read the gradations using any edge on the upper side or the lower side with respect to the gradation line, and for example, the shapes may be different between the upper and lower sides.

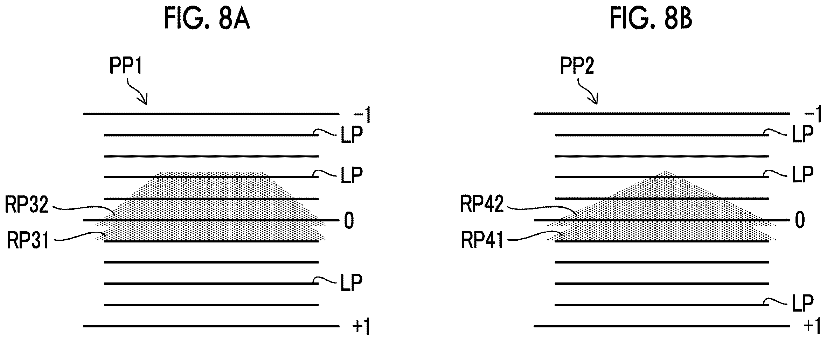

FIGS. 8A and 8B are views showing a measurement mark in a case where the reading pattern is vertically asymmetrical, the measurement mark being viewed from the non-printing surface side. FIG. 8A shows the reading pattern RP31 drawn by the ink jet head 20W1 based on image data of a trapezoidal reading pattern and a reading pattern RP32 drawn by the ink jet head 20W2 based on image data of the trapezoidal reading pattern. In a case where a longer side, among an upper base and a lower base of the trapezoid, is drawn at a position of overlapping the gradation line LP of "0" of the reference pattern PP1, the measurement mark of FIG. 8A indicates that the color registration is correct. Therefore, a deviation amount can be detected by reading the gradations using the longer side among the upper base and the lower base.

FIG. 8B shows a reading pattern RP41 drawn by the ink jet head 20W1 based on image data of an isosceles triangular reading pattern and a reading pattern RP42 drawn by the ink jet head 20W2 based on the image data of the isosceles triangular reading pattern. A measurement mark of FIG. 8B indicates that the color registration is correct in a case where the base of the isosceles triangle is drawn at a position of overlapping the gradation line LP of "0" of the reference pattern PP1. Therefore, the deviation amount can be detected by reading the gradations using the base.

As described above, the measured pattern may be a point-asymmetric figure.

In detection of a deviation amount of color registration, it is preferable that the measurement mark is disposed at each of positions on the upstream side (-Y-direction side) in the transport direction, on the downstream side (+Y-direction side) in the transport direction, on one side (+X direction side) toward the transport direction, and on the other side (-X-direction side) toward the transport direction with respect to a print image, and a deviation amount at each of the positions is detected. In this case, it is preferable to use different measurement marks depending on a position where the deviation amount is detected. In the measurement mark that has been described hereinbefore, the shape of the measured pattern is point-asymmetric. Therefore, by changing directions of measurement marks depending on a position where the deviation amount is detected, the measurement marks different from each other depending on the position can be disposed.

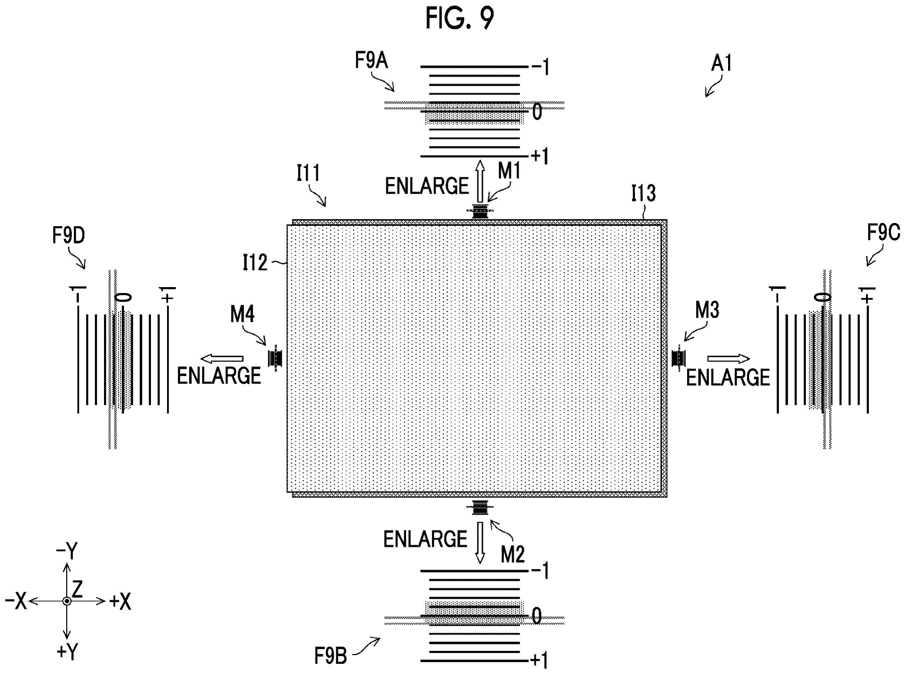

FIG. 9 is a view showing a relationship between a print image drawn on the impermeable substrate A1 and a measurement mark and shows a case of being viewed from the non-printing surface side of the impermeable substrate A1. A print image I11 shown in FIG. 9 includes a color image 112 and a white background image 113 drawn in a superimposed manner on the color image I12. In addition, a measurement mark M1 is disposed on the -Y-direction side of the print image I11, a measurement mark M2 is disposed on the +Y-direction side of the print image I11, a measurement mark M3 is disposed on the +X-direction side of the print image I11, and a measurement mark M4 is disposed on the -X-direction side of the print image 111.

F9A of FIG. 9 is an enlarged view of the measurement mark M1. In the reference pattern of the measurement mark M1, the gradation lines are parallel to the X-direction, and the value increases as the gradation line is closer to a +Y-direction. In addition, in the measured pattern of the measurement mark M1, a reading pattern is configured by a straight line and a rectangle of which one side on the -Y-direction side is in contact with the straight line.

F9B of FIG. 9 is an enlarged view of the measurement mark M2. In the reference pattern of the measurement mark M2, the gradation lines are parallel to the X-direction, and the value increases as the gradation line is closer to the +Y-direction. In addition, in the measured pattern of the measurement mark M2, a reading pattern is configured by a straight line and a rectangle of which one side on the +Y-direction side is in contact with the straight line.

F9C of FIG. 9 is an enlarged view of the measurement mark M3. In the reference pattern of the measurement mark M3, the gradation lines are parallel to the Y-direction, and the value increases as the gradation line is closer to the +X-direction. In addition, in the measured pattern of the measurement mark M3, a reading pattern is configured by a straight line and a rectangle of which one side on the +X-direction side is in contact with the straight line.

F9D of FIG. 9 is an enlarged view of the measurement mark M4. In the reference pattern of the measurement mark M4, the gradation lines are parallel to the Y-direction, and the value increases as the gradation line is closer to the +X-direction. In addition, in the measured pattern of the measurement mark M4, a reading pattern is configured by a straight line and a rectangle of which one side on the -X-direction side is in contact with the straight line.

As described above, the measurement marks M1 to M4 different from each other are disposed on the -Y-direction side, the +Y-direction side, the +X-direction side, and the -X-direction side of the print image I11, respectively. Since the measurement marks M1 to M4 are different from each other, the user can identify which position the measurement mark is. In addition, the user can detect a deviation amount of color registration in the X-direction or the Y-direction of each position of the print image I11 by reading a gradation at a position of an edge in contact with a straight line of the measured pattern of each of the measurement marks M1 to M4.

### <Second Embodiment>

Although a method of reading a position of a measured pattern of a measurement mark has been described in the first embodiment, a method of providing a gradation line of a reference pattern will be described in a second embodiment.

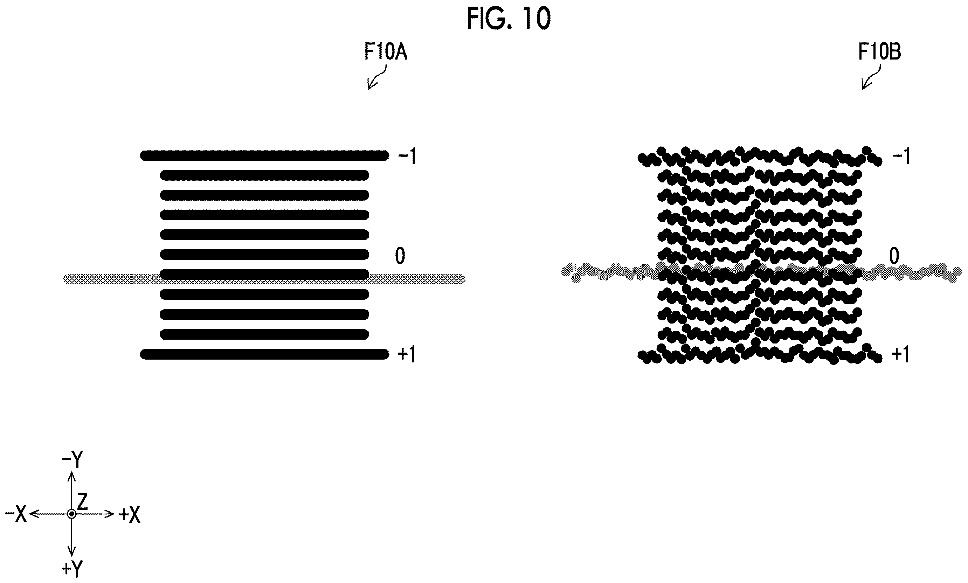

FIG. 10 is a view showing a measurement mark on a substrate on which drawing is performed based on image data of the measurement mark. F10A of FIG. 10 shows a measurement mark in a case where drawing can be performed in an ideal dot disposition. The measurement mark of F10A is disposed with a plurality of gradation lines at equal intervals (an example of a "first interval") in the Y-direction (an example of a "first direction") and numbers "-1", "0", and "+1" respectively indicating values of gradations.

F10B of FIG. 10 shows a measurement mark actually drawn. The numbers of gradations shown in F10B are also actually broken shapes like the measurement marks, but are shown in a normal shape herein.

In general, the ink jet head causes landing variations in which landing positions of discharged inks vary due to variations in discharge timing for each nozzle and/or variations in discharge direction. For this reason, even in a case where a linear pattern parallel to the nozzle direction (herein, the X-direction) is to be drawn, a straight line as fine as data cannot be drawn in reality in some cases. In the case of the single-pass method, since the position of the nozzle is fixed, a straight line in a direction orthogonal to the nozzle direction can be finely drawn as a straight line.

In the example shown in FIG. 10, landing positions of dots vary in the direction (±Y direction in FIG. 10) orthogonal to the nozzle direction, and thus a straight line is broken. For this reason, in a case where an interval between the gradation lines of the reference pattern is excessively small, a positional relationship between gradation lines of a color ink and a reading pattern of a white ink is locally different, and it is difficult to correctly read the gradation. Therefore, the gradation lines of the reference pattern need to have an interval of a certain level or more.

As a result of examining readability of the gradation, the inventors have found that, in a case where an average of 3σA (an example of a "first value") which is three times a first standard deviation σA indicating an ink landing variation of the ink jet head that draws the gradation lines in a direction (±Y direction in FIG. 10) orthogonal to the gradation lines, 3σB (an example of a "second value") which is three times a second standard deviation σB indicating an ink landing variation of one ink jet head that draws the reading pattern in a direction orthogonal to the gradation lines, and 3σC (an example of a "third value") which is three times a third standard deviation σC indicating an ink landing variation of the other ink jet head that draws the reading pattern in a direction orthogonal to the gradation lines is defined as W, an interval between the gradation lines adjacent to each other in data of the reference pattern is preferably equal to or larger than 3 times W. In addition, it is found that the interval between the gradation lines adjacent to each other in the data of the reference pattern is preferably 100 times or less of W.

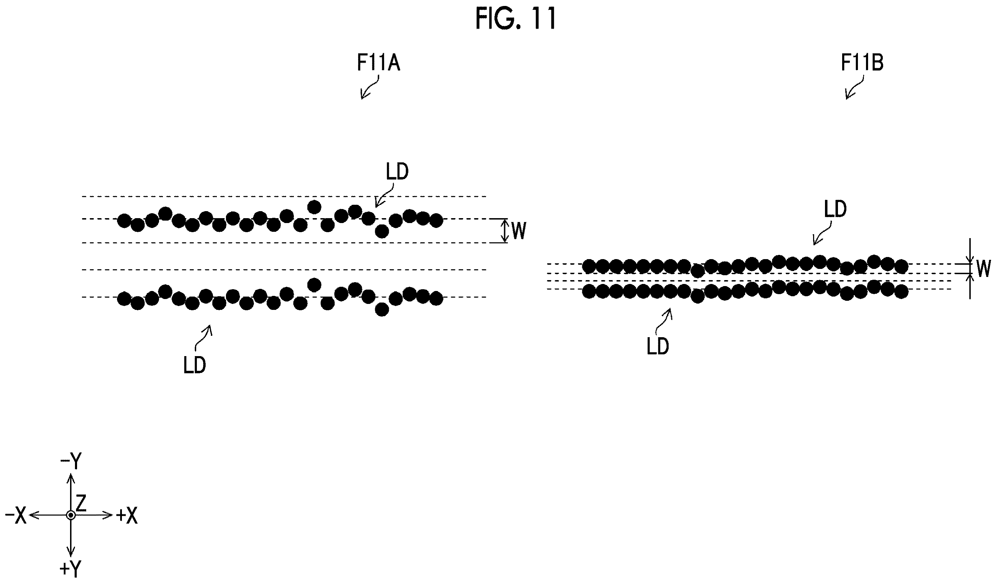

FIG. 11 is a view showing an example of a gradation line in a case where an interval therebetween is three times W. F11A of FIG. 11 shows an interval between the gradation lines LD in a case where the value of W is relatively large, and F11B of FIG. 11 shows an interval between the gradation lines LD in a case where the value of W is relatively small. With the reference pattern in which the gradation lines are drawn in this manner, it is easy to recognize a difference in the overlapping manner between the gradation lines of a color ink and the reading pattern of a white ink, and reading accuracy of the gradation can be improved. In a case where the user reads the gradation visually, it is preferable that the interval between the gradation lines is a convenient value such as a multiple of 0.1 mm.

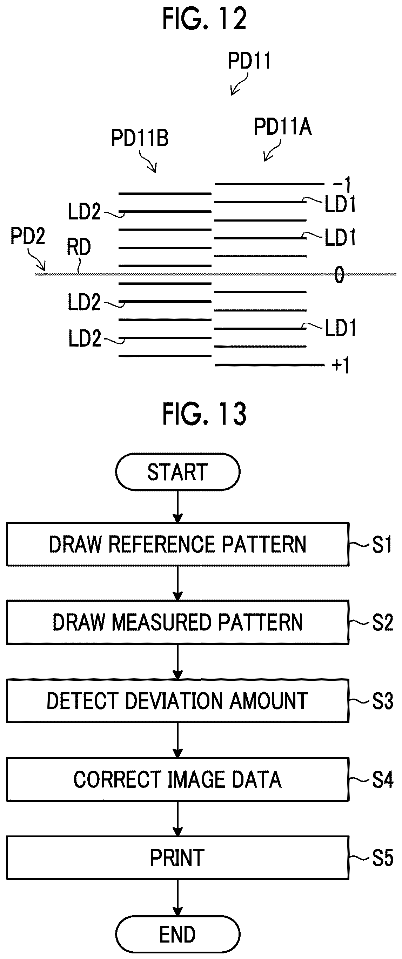

In addition, a plurality of reference patterns may be used in order to improve the reading accuracy of the gradation. FIG. 12 is a view showing an example of a measurement mark and shows image data of the measurement mark. The measurement mark has a reference pattern PD11 and the measured pattern PD2.

The reference pattern PD11 is a pattern drawn by any one of the ink jet head 20K, 20C, 20M, or 20Y. The reference pattern PD11 has a reference pattern PD11A and a reference pattern PD11B.

The reference pattern PD11A includes a plurality of gradation lines LD1. The plurality of gradation lines LD1 each are straight lines extending in one direction and are disposed at equal intervals in another direction (an example of the "first direction") orthogonal to the one direction. The reference pattern PD11A has a width of 2 mm from minus 1 mm (an example of a "first position") to plus 1 mm, and the gradation lines LD1 (an example of a "plurality of first gradation lines") are disposed at an interval of 0.2 mm (an example of the "first interval"). The gradation line LD1 at a position of minus 1 mm, the gradation line LD1 at a position of 0 mm, and the gradation line LD1 at a position of plus 1 mm are relatively longer than the gradation lines LD at other positions. In addition, at the positions of minus 1 mm, 0 mm, and plus 1 mm of the reference pattern PD11A, the numbers of "-1", "0", and "+1" indicating the values of the gradations are disposed, respectively.

The reference pattern PD11B includes a plurality of gradation lines LD2. The plurality of gradation lines LD2 each are straight lines extending in one direction parallel to the gradation line LD1 and are disposed at equal intervals in another direction (an example of the "first direction") orthogonal to the one direction. The reference pattern PD11B is disposed on the left side of the reference pattern PD11A in FIG. 12. The reference pattern PD11B has a width of 1.8 mm from minus 0.9 mm (an example of a "second position") to plus 0.9 mm, and the gradation lines LD2 (an example of a "plurality of second gradation lines") are disposed at an interval of 0.2 mm (an example of the "first interval").

That is, the gradation lines LD1 and the gradation lines LD2 are disposed in a zigzag manner to constitute gradation lines at substantially 0.1 mm intervals.

The measured pattern PD2 is a pattern drawn by the ink jet head 20W1 and the ink jet head 20W2. The measured pattern PD2 includes the reading pattern RD. The reading pattern RD is a straight line parallel to the gradation lines LD1 and the gradation lines LD2, is disposed to be superimposed at the position of the gradation line LD of "0" of the reference pattern PD11A, and is disposed over the reference pattern PD11A and the reference pattern PD11B.

As described above, the gradation lines of the reference pattern need to have an interval of a certain level or more. However, in a case where the interval between the gradation lines is too wide, it is difficult to accurately read a deviation amount of color registration. On the other hand, as shown in FIG. 12, by disposing the gradation lines so that the positional relationship between the gradation lines is shifted and disposing the reading pattern over both gradation lines, it is possible to improve the reading accuracy of the gradation.

### <Method for Manufacturing Printed Material>

FIG. 13 is a flowchart showing steps of a method for manufacturing a printed material using the ink jet printing apparatus 10. The method for manufacturing a printed material is realized by the processor 30A reading out a printed material manufacturing program from the memory 30B and executing the printed material manufacturing program. The printed material manufacturing program maybe provided via the input device 40.

The transport control unit 32 controls the unwinding device R1 and the winding device R2 to transport the impermeable substrate A1. The pretreatment liquid application control unit 34 controls the pretreatment liquid application device P1 to apply a pretreatment liquid to the impermeable substrate A1. The drying control unit 38 controls the pretreatment liquid drying zone DP1 to dry the pretreatment liquid.

In step S1, the printing control unit 36 causes any one of the ink jet head 20K, 20C, 20M, or 20Y to draw a reference pattern on the impermeable substrate A1 (an example of a "first substrate") to which a pretreatment liquid has been applied and dried, in accordance with a command from the general control unit 30. The reference pattern is, for example, the reference pattern PD1 shown in FIG. 6.

The drying control unit 38 controls the first drying zone D1 to dry the reference pattern.

In step S2, the printing control unit 36 causes the ink jet head 20W1 and the ink jet head 20W2 to draw a measured pattern on the impermeable substrate A1 in accordance with the command from the general control unit 30. The measured pattern is, for example, the measured pattern PD22 shown in FIG. 6. That is, the measured pattern is drawn to be superimposed on the reference pattern drawn in step S1.

The drying control unit 38 controls the second drying zone D2 to dry the measured pattern.

The printing control unit 36 may acquire reference pattern data and measured pattern data from the memory 30B. In addition, it is preferable that the printing control unit 36 draws the reference pattern and the measured pattern at four places of a print image on the +X-direction side (an example of the "first position"), the -X-direction side, the +Y-direction side, and the - Y-direction side, in the same manner as in FIGS. 8A and 8B. Herein, the reference pattern and the measured pattern need may be drawn, and the print image may not be drawn.

In step S3, a deviation amount between the drawn reference pattern and the drawn measured pattern is detected. The user may measure the deviation amount using a ruler or the like to detect the deviation amount. The deviation amount may be calculated by reading the drawn reference pattern and the drawn measured pattern with a scanner (an example of a "reading device") provided in the ink jet printing apparatus 10 and performing image processing on a reading result with the processor 30A.

In step S4, the processor 30A acquires the deviation amount detected in step S3 and corrects image data of the print image in accordance with the acquired deviation amount. For example, the size of data of a color image drawn by the ink jet heads 20K, 20C, 20M, and 20Y is maintained, and the size of data of a white background image drawn by the ink jet heads 20W1 and 20W2 in the X-direction and the Y-direction is enlarged and/or reduced in accordance with the deviation amount.

In step S5, a print image is drawn on the impermeable substrate A1 (an example of a "second substrate") based on print image data corrected in step S4. The impermeable substrate A1 on which the print image is drawn and which is wound by the winding device R2 corresponds to the "printed material". By performing the drawing in this manner, the drawing positions of the color image and the white background image can be matched, and protrusion of the white background image from the color image can be suppressed.

In the steps of the method for manufacturing a printed material, steps S1 to S3 correspond to steps of a deviation amount detection method. In addition, in the steps of the method for manufacturing a printed material, steps S1 to S4 correspond to steps of a color misregistration adjustment method.

### <Others>

The technical scope of the present invention is not limited to the scope described in the embodiments. The configuration and the like in each embodiment can be combined between the embodiments as appropriate without departing from the gist of the present invention.

### Explanation of References

10: ink jet printing apparatus
20C: ink jet head
20K: ink jet head
20M: ink jet head
20W1: ink jet head
20W2: ink jet head
20Y: ink jet head
22: head module
30: general control unit
30A: processor
30B: memory
32: transport control unit
34: pretreatment liquid application control unit
36: printing control unit
38: drying control unit
40: input device
42: output device
A1: impermeable substrate
D1: first drying zone
D2: second drying zone
DP1: pretreatment liquid drying zone
I0: image
I1: color image
I2: white background image
I11: print image
I12: color image
I13: white background image
IJ1: first printing unit
IJ2: second printing unit
LD: gradation line
LD1: gradation line
LD2: gradation line
LP: gradation line
M1: measurement mark
M2: measurement mark
M3: measurement mark
M4: measurement mark
P1: pretreatment liquid application device
PD1: reference pattern
PD2: measured pattern
PD3: measured pattern
PD11: reference pattern
PD11A: reference pattern
PD11B: reference pattern
PD22: measured pattern
PP1: reference pattern
PP2: measured pattern
PP2A: measured pattern
PP2B: measured pattern
PP21: reference pattern
PP31: measured pattern
PP32: measured pattern
PR1: reference pattern
R1: unwinding device
R2: winding device
RD: reading pattern
RD1: reading pattern
RD2: reading pattern
RP: reading pattern
RP11: reading pattern
RP12: reading pattern
RP21: reading pattern
RP22: reading pattern
RP31: reading pattern
RP32: reading pattern
RP41: reading pattern
RP42: reading pattern
RPA: reading pattern
RPB: reading pattern
S1 to S5: steps of method for manufacturing printed material
T1: transport roll
T2: transport roll

## Claims

1. A printing apparatus comprising:
a plurality of liquid discharging heads that discharge a liquid;
a relative movement device that relatively moves the plurality of liquid discharging heads and a substrate;
at least one processor; and
at least one memory that stores a command to be executed by at least the one processor,
wherein based on image data, an image is drawn on the relatively moving substrate as the liquid is discharged from the plurality of liquid discharging heads, and
at least the one processor is configured to:
draw a reference pattern on the substrate by discharging a liquid of a first color from a first liquid discharging head among the plurality of liquid discharging heads,
draw each point-asymmetric measured pattern on the substrate by discharging a liquid of a second color different from the first color from a second liquid discharging head and a third liquid discharging head, which are different from the first liquid discharging head, among the plurality of liquid discharging heads, and
correct the image data in accordance with a deviation amount between the reference pattern and the measured pattern.

2. The printing apparatus according to claim 1,
wherein the measured pattern in a case where the deviation amount in a direction of the relative movement is acquired and the measured pattern in a case where the deviation amount in a direction orthogonal to the direction of the relative movement is acquired are different from each other.

3. The printing apparatus according to claim 2,
wherein the measured pattern in a case where the deviation amount on an upstream side in the direction of the relative movement, which is the deviation amount in the direction of the relative movement, is acquired and the measured pattern in a case where the deviation amount on a downstream side in the direction of the relative movement is acquired are different from each other.

4. The printing apparatus according to claim 2,
wherein the measured pattern in a case where the deviation amount on one side toward the direction of the relative movement, which is the deviation amount in the direction orthogonal to the direction of the relative movement, is acquired and the measured pattern in a case where the deviation amount on the other side toward the direction of the relative movement is acquired are different from each other.

5. The printing apparatus according to claim 1,
wherein the reference pattern includes a plurality of gradation lines disposed at a first interval in a first direction, and
the first interval is equal to or larger than three times an average of a first value which is three times a first standard deviation indicating a liquid landing variation of the first liquid discharging head with respect to the first direction, a second value which is three times a second standard deviation indicating a liquid landing variation of the second liquid discharging head with respect to the first direction, and a third value which is three times a third standard deviation indicating a liquid landing variation of the third liquid discharging head with respect to the first direction.

6. The printing apparatus according to claim 1,
wherein the reference pattern includes
a plurality of first gradation lines disposed from a first position at a first interval in a first direction, and
a plurality of second gradation lines disposed from a second position different from the first position at the first interval in the first direction.

7. The printing apparatus according to claim 1, further comprising:
a drying device between the first liquid discharging head, and a second liquid discharging head and a third liquid discharging head in a direction of the relative movement.

8. The printing apparatus according to claim 1,
wherein the substrate is transparent, and
an image is drawn on the substrate by discharging the liquid from at least the first liquid discharging head, among the plurality of liquid discharging heads, to a printing surface of the substrate, and a background image is drawn on the substrate by discharging a white liquid from the second liquid discharging head and the third liquid discharging head to the printing surface of the substrate.

9. The printing apparatus according to any one of claims 1 to 8,
wherein the image is drawn on the substrate in a single-pass method.

10. The printing apparatus according to claim 1, further comprising:
a reading device that reads the substrate on which the reference pattern and the measured pattern are drawn,
wherein the processor is configured to calculate the deviation amount from a reading result of the reading device.

11. A method for manufacturing a printed material, comprising:
via at least one processor,
drawing a reference pattern at a first position of a relatively moving first substrate by discharging a liquid of a first color from a first liquid discharging head among a plurality of liquid discharging heads that discharge a liquid;
drawing each point-asymmetric measured pattern at the first position of the relatively moving first substrate by discharging a liquid of a second color different from the first color from a second liquid discharging head and a third liquid discharging head, which are different from the first liquid discharging head, among the plurality of liquid discharging heads;
detecting a deviation amount between the reference pattern and the measured pattern;
acquiring image data of the printed material;
correcting the image data in accordance with the deviation amount; and
drawing an image on a relatively moving second substrate by discharging a liquid from the plurality of liquid discharging heads based on the corrected image data.

12. A program causing a computer to realize:
a function of drawing a reference pattern at a first position of a substrate by discharging a liquid of a first color from a first liquid discharging head; and
a function of drawing each point-asymmetric measured pattern at the first position of the substrate by discharging a liquid of a second color different from the first color from a second liquid discharging head and a third liquid discharging head, which are different from the first liquid discharging head.

13. A non-transitory computer-readable recording medium on which the program according to claim 12 is recorded.
